# EUROPEAN PATENT SPECIFICATION

(11) **EP 1 942 720 B1**
(45) Date of publication and mention of the grant of the patent: **29.12.2010**
(21) Application number: 06807050.7
(22) Date of filing: 06.10.2006
(51) Int. Cl.: A01G 13/02, A01G 15/00, A01G 9/22

(54) **SOLAR RADIATOR**
SOLARSTRAHLER
RADIATEUR SOLAIRE

(30) Priority: 12.10.2005 IT VI20050269; 07.11.2005 IT VI20050293
(43) Date of publication of application: 16.07.2008
(73) Proprietor: Tessarolo, Ferdinando, 36100 Vicenza (IT)
(72) Inventor: Tessarolo, Ferdinando, 36100 Vicenza (IT)
(74) Representative: Lorente Berges, Ana
(86) International application number: PCT/EP2006/067154
(87) International publication number: WO 2007/042481

(56) References cited:
- EP-A- 1 442 656
- EP-A- 1 728 417
- EP-A1- 1 442 656
- EP-A2- 1 728 417
- WO-A-01/70012
- WO-A-2002/045318
- WO-A-2005/070194
- WO-A-2007/136654
- WO-A1-01/70012
- WO-A1-2005/070194
- WO-A2-02/45318
- WO-A2-2007/136654
- DE-U- 20 009 640
- DE-U1- 20 009 640
- JP-A- 59 167 652
- NL-C1- 1 002 156
- US-A- 2 673 420
- US-A- 3 943 911
- US-A- 4 197 673
- US-A- 4 197 673
- US-A- 4 287 683
- US-A- 4 287 683
- US-A- 5 519 965
- US-A- 5 519 965
- "set of photographs of panels consisting of two laminae"
- "Article on "Solar Energy Absorbed by the Earth""
- R. A. ANTHES: "Meteorology" THE UNIVERSITY CORPORATION FOR ATMOSPHERIC RESEARCH , BOULDER, CO, US * page 57 *

## Description

### Technical field

The present invention relates to a solar radiator suitable to collect, transmit and dissipate at least partially the energy of the solar radiation that strikes it, so as to control at least partially the effects of excessive solar irradiation and protect portions of soil related to areas at risk of drought or desertification, and also suitable to protect areas at risk of thawing of snow or glaciers and more.

### Background Art

As is known, the conditions of the atmosphere and life on Earth depend critically on the amount of irradiation received from the sun. Solar radiation is transmitted by irradiation, which occurs by means of electromagnetic waves which penetrate easily to the innermost layers of the atmosphere. This application of energy helps to determine the characteristics of the climates on Earth and in particular even differences in temperature of a few degrees Celsius have a great effect on climate.

This amount of heat sometimes reaches values which not only affect considerably the environmental and climatic conditions but even interfere directly with plant and animal life and with human activities connected to it, for example agricultural activities in dry or desert-like regions. It is worthwhile and necessary to anticipate that the object of the "Solar Radiators" (name of the patent) is a Solar Radiator 1 (embodiment), like the Solar Radiators 1 of Figures 5, 6, 7, 8, and 9, not the individual panels 2 by themselves except for those Solar Radiators made of a single round panel 2 like those of figures 15 and 16.

In the building sector, in order to deal with the excessive amount of heat sometimes transmitted to buildings and structures, an attempt has been made over time to devise various insulation systems, the most effective of which are based on building ventilated roofs and walls. According to this constructive solution, the primary walls that actually constitute the buildings and coverings receive the superimposed addition of other walls, which are arranged further outward and are separated so as to form air spaces which dissipate at least partly the heat generated by solar irradiation, or walls covered with insulating material are used, or sunshades are installed, see e.g. documents DE-U- 20009640 and US-A-4287683

Unfortunately, such solutions affect only the building sector, whereas little has been donc to reduce the effect of excessive solar irradiation on crops and soils in general, in which the greatest effort has been put into enhancing irrigation systems. However, it should be noted that irrigation water normally contains a certain quantity of salts, which over time tend to accumulate in the soil and become toxic for plants; therefore, it would be convenient to avoid the abuse of irrigation water, at least in order to slow the accumulation of these salts in the soil.

### Disclosure of the Invention

The aim of the present invention is to solve at least partially the problems described above, by providing a solar radiator which, despite working massively, is capable of reducing the effects caused by excessive exposure of soils to the rays of the sun and of modifying accordingly the irradiation conditions, reducing their effects and making the areas protected by solar radiators more suitable for the spontaneous growth nf plants and more.

Within this aim, an object of the invention is to provide a solar radiator which is more or less complex and is capable of reducing at least partially the effects of solar irradiation in order to prevent the excessive heating of portions of the soil and of the first meters of air related to said soil, contrasting the thawing of snow and ice in mountain or polar regions and contrasting, in dry and desert-like areas, the drying of the soil and its gradual desertification.

Another object of the invention is to provide a solar radiator which, in some situations, is capable of facilitating agricultural activities even in dry or desert-like areas.

Another object of the invention is to provide a solar radiator which is able to reduce the effects caused by periods of drought without consuming energy.

Another object of the invention is to provide a solar radiator which is capable of keeping in the shade or partial shade for many hours of the day important portions of the site where it is installed, reducing the evaporation of the water or moisture contained in the soil and consequently contrasting its drying, facilitating the development of plants and facilitating agricultural activities.

Another object of the invention is to provide a solar radiator which is capable of applying a protective action against at least part of the harmful effects caused by the wind.

Another object of the invention is to provide a solar radiator which can be manufactured with materials which can be recycled and is advantageous also from an environmental standpoint.

This aim and these and other objects which will become better apparent hereinafter are achieved by a solar radiator according to the appended claims.

### Brief description of the drawings

Further characteristics and advantages of the invention will become better apparent from the following detailed description of some preferred but non-limiting and not exclusive embodiments of a solar radiator according to the invention, illustrated by way of non-limiting example in the accompanying drawings, wherein:

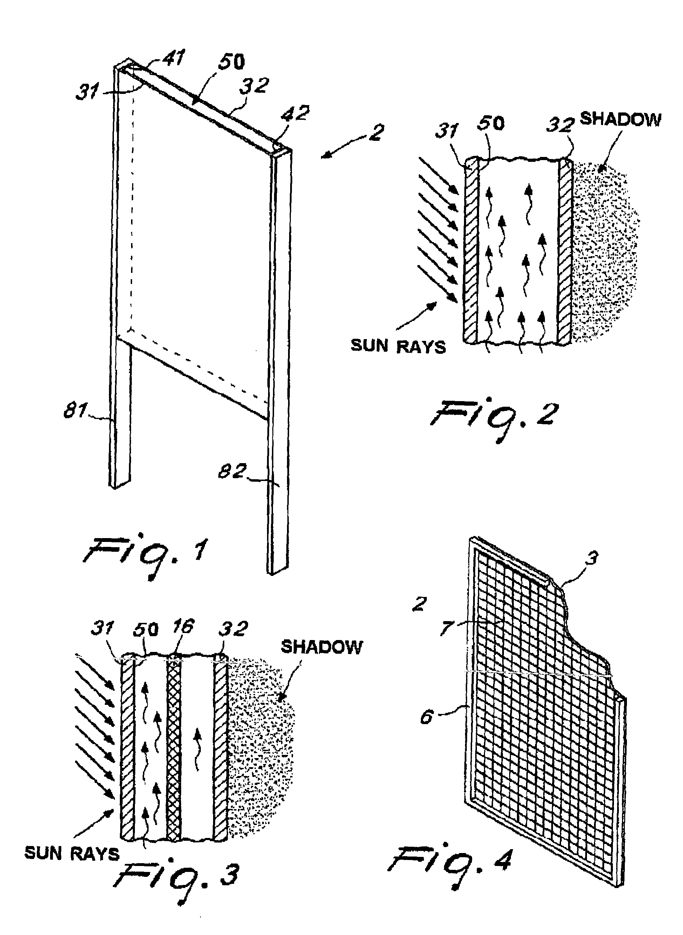

Figure 1 is a perspective view of a panel of the invention;
Figure 2 is a partially sectional enlarged-scale side view of a portion of the panel of Figure 1;
Figure 3 is a sectional view of another embodiment of the device of Figure 2;
Figure 4 is a perspective view of a possible variation of the heat-conducting laminas;

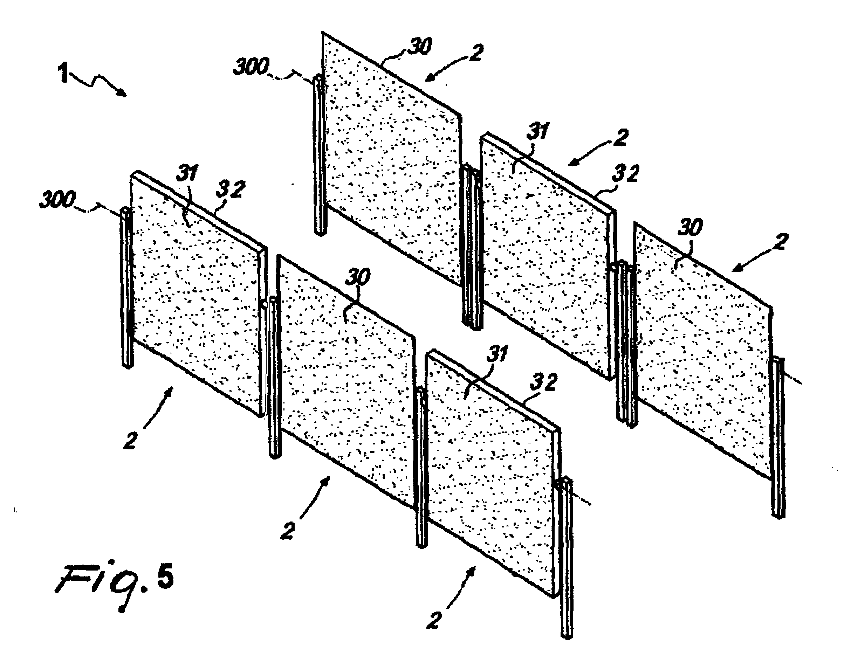

Figure 5 is a perspective view of a solar radiator 1 according to the invention ;

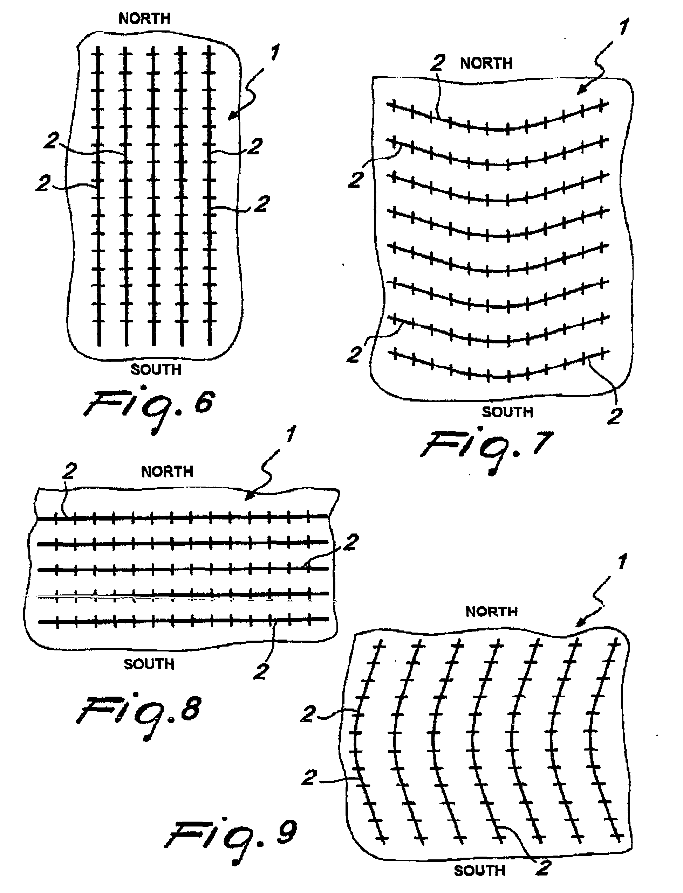

Figure 6 is a plan view of a first embodiment of a solar radiator 1, in which the segments indicated by the arrows 2 schematically represent the panels;
Figure 7 is a plan view of a second embodiment of a solar radiator according to the invention;
Figure 8 is a plan view of a third embodiment of a solar radiator according to the invention;
Figure 9 is a plan view of a fourth embodiment of a solar radiator according to the invention;

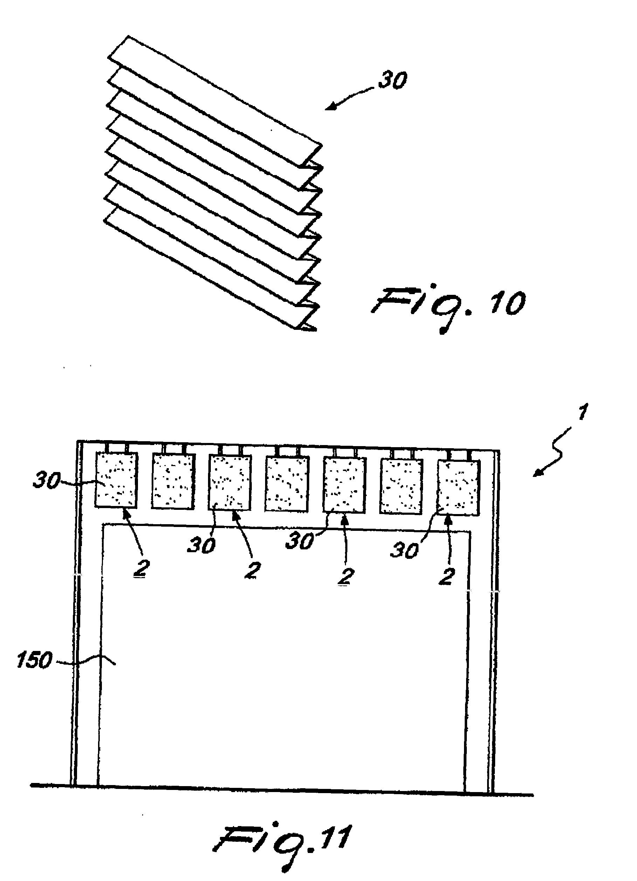

Figure 10 is a perspective view of another embodiment of a heat-conducting lamina of a panel according to the invention;
Figure 11 is a front view of an example of use of a solar radiator according to the invention;

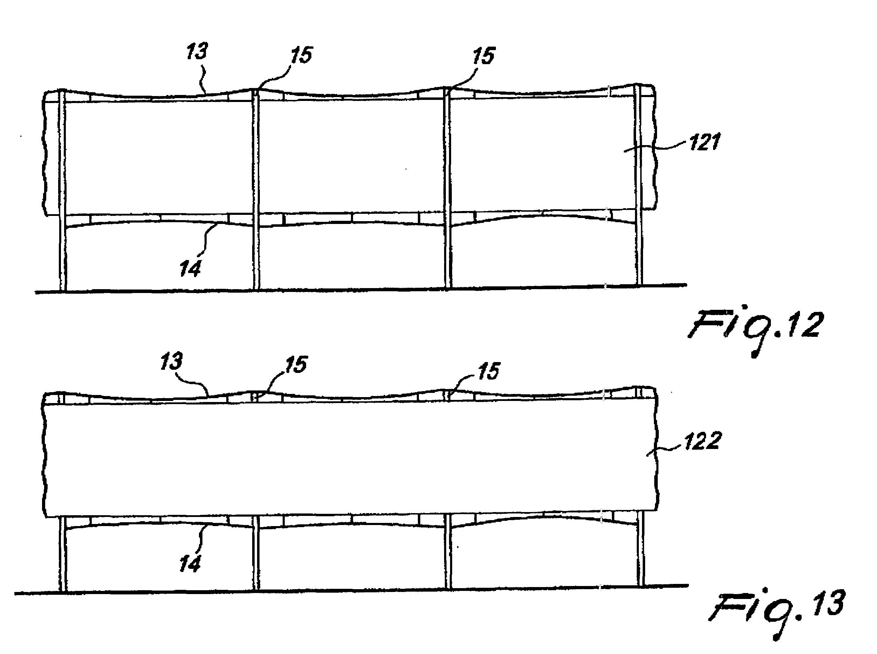

Figure 12 is a front view of another embodiment of a panel of a solar radiator according to the invention during production;
Figure 13 is a front view of the embodiment of Figure 12 upon completion;

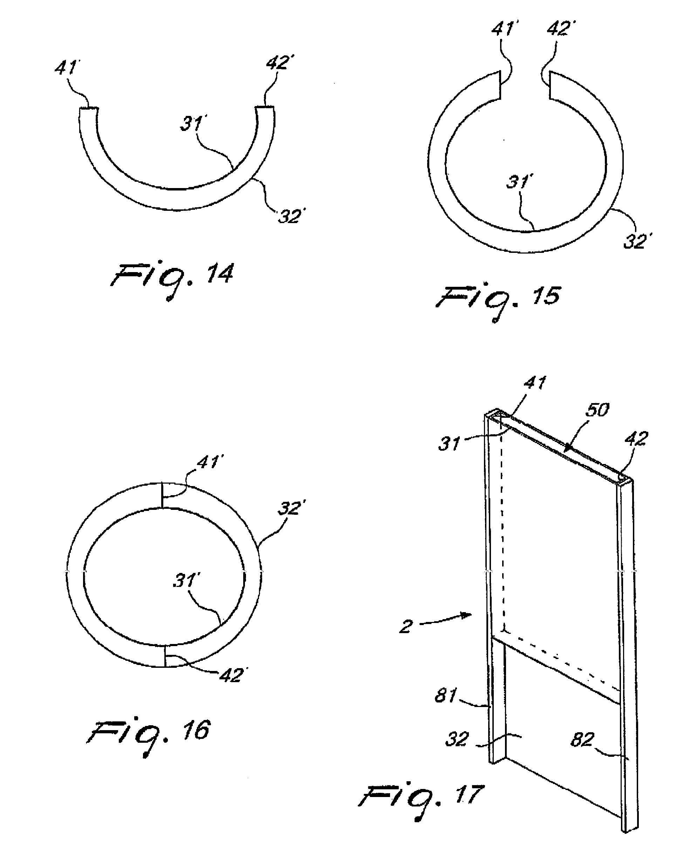

Figure 14 is a plan view of another embodiment of the panel of Figure 1;
Figure 15 is a plan view of a variation of the embodiment of Figure 14;
Figure 16 is a plan view of another variation of the embodiment of Figure 15;
Figure 17 is another embodiment of the panel according to the invention;

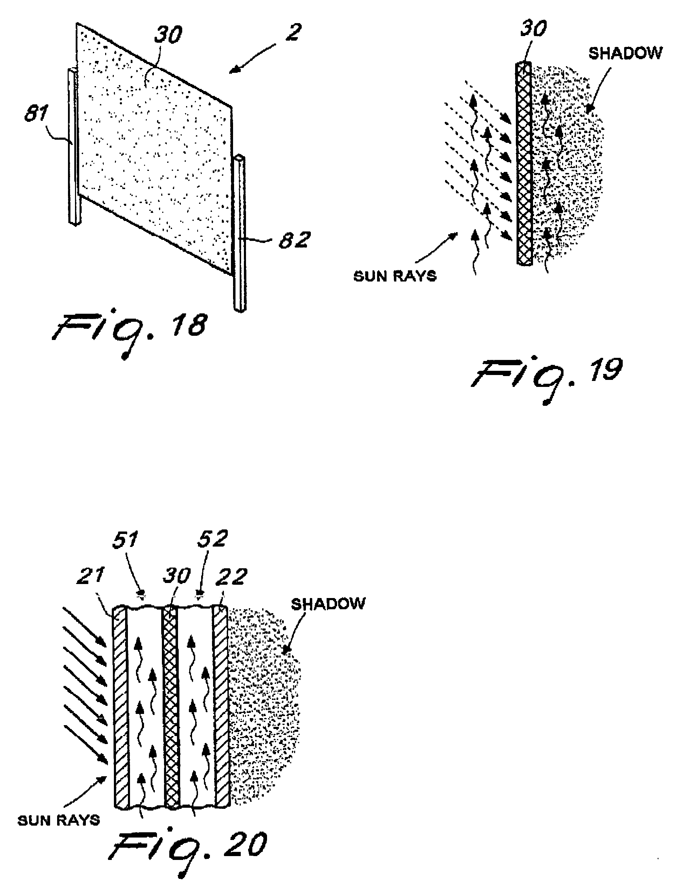

Figure 18 is a view of a panel with a device with one heat-conducting lamina, but not according to the invention
Figure 19 is a partial lateral enlarged-scale sectional view of the embodiment of Figures 18 of the device with a single lamina; but not according to the invention
Figure 20 is an enlarged-scale sectional side view of a variation of the device of Figure 19

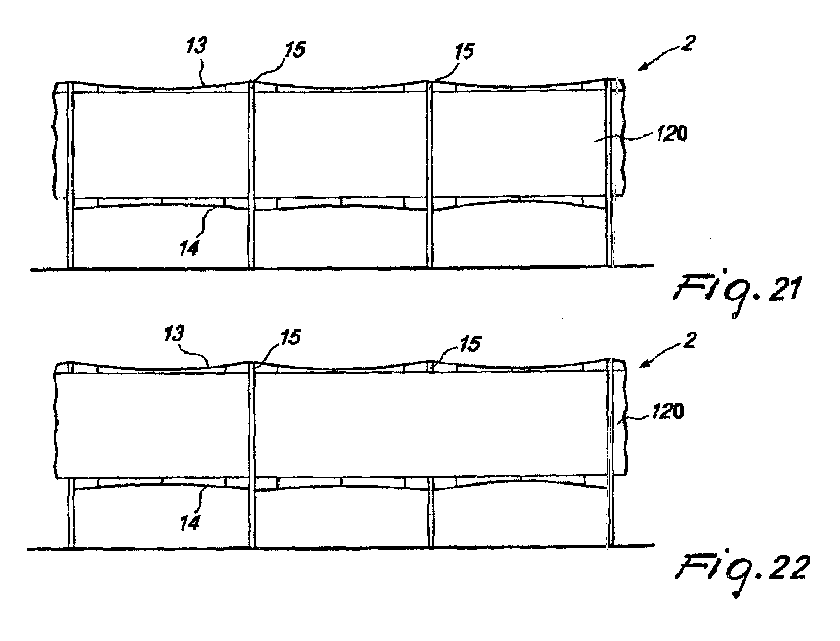

Figure 21 is a view of a panel composed of a device constituted by a fabric made of heat-conducting material;
Figure 22 is a view of the panel of Figure 21.

### Ways of carrying out the Invention

With reference to the figures, a solar radiator, generally designated by the reference numeral 1, comprises, according to the invention, at least one panel 2, which is designed to: a) produce shade; b) collect part of the energy irradiated by the sun toward the ground to be protected; c) generate rising air streams; d) dissipate passively into the atmosphere at least said energy without using additional energy.

The panel according to Figure 1 entails fixing the device, which is composed of two heat-conducting laminas 31 and 32 which are arranged so as to substantially face each other and are spaced by two lateral spacers 41 and 42, which are interposed between the two heat-conducting laminas 31 and 32 and are joined at their lateral ends in order to form an interspace 50, so that they are coupled to a supporting frame, which by way of example shown in Figure 1 is constituted by a simple pair of poles 81 and 82, which are driven at right angles into the ground and which, by supporting said laminas , not only determine a distance thereof from the ground direction with respect to the path of the apparent daily motion of the sun or according to another more convenient orientation.

in particular, the two heat-conducting laminas 31 and 32, which can be constituted for example by thin laminas made of metal or associated alloys or can be made of other heat-conducting materials suitable for the purpose to be achieved, have shapes which are not necessarily regular but substantially mutually coincident, while their dimensions and thickness may vary within such limits as to ensure the mechanical stability of the panel 2, allowing said panel to withstand for example the stresses due to atmospheric agents, such as for example the wind.

Figure 2 illustrates the effects of the operation of the solar radiator applied to a panel with a device composed of two heat-conducting laminas wherein the arrows inside the laminas 31 and 32 represent the rising air flow within the interspace 50. The shadow produced by the panel is shown to the right of the lamina 32. Figure 2 does not show the flow of rising air to the left of the lamina 31 as it is a secondary flow which has a lower effect than the flow within the interspace 50.

Figure 3 is a view of the effects of the operation of the solar radiator applied to the panel with a device composed of two heat-conducting laminas 31, and 32 and a thermally insulating lamina 16 which is interposed between the two laminas in order to reduce, by contact of the air outside the panel with the lamina 32, the dissipation of the heat energy of the stream of air that circulates in an interspace 51.

As shown in Figure 4, the strength of the panel 2 can be increased by laminas with a reinforcement border 6, which is joined to at least one portion of the edge of the heat-conducting lamina 30 so as to strengthen its structure, and it can also be strengthened by a mesh 7, which is joined to at least one portion of the heat-conducting lamina 30, or by an advantageous combination of the two reinforcements.

The mechanical strength of the panel 2 can be increased further by using heat-conducting laminas 30 with a horizontally corrugated surface, as shown in Figure 10.

In the embodiment shown in Figures 12 and 13, the panel 2 takes the form of a structure composed of poles, cables and hooks and other accessories, in which the heat-conducting laminas 31 and 32 can be constituted by thin laminas of metal or other heat-conducting materials, as described earlier, or by sheets of heat-conducting fabric 121 and 122, which are joined at their upper ends to a first pair of overhead cables 13 and at their lower ends to a another pair of overhead cables 14 which are connected to a supporting frame 15, which is formed for example by two poles and the corresponding braces, which supports and stretches them. In the specific case, the sheets of heat-conducting fabric 121 and 122, shown in Figures 12 and 13, can incorporate the supporting frame 15 or might be arranged laterally therein both on the same side, without incorporating it, by utilizing anchoring elements and spacers which are not shown in the accompanying figures.

In Figures 14, 15 and 16, the supports are not shown and might be the same spacers 41 and 42, which are higher than the heat-conducting laminas.

With Figure 17, as an alternative, it is possible to provide the panel 2 by using two heat-conducting laminas 31 and 32 with different heights, ensuring in any case access of the air to the interspace 50, as shown in the accompanying figure. It is optionally possible to fix to the ground the heat-conducting lamina with a greater height in order to subsequently support the other one and constitute a self-supporting structure.

Figure 18 is a view of the panel 2 with a device with one heat-conducting lamina 30 and supporting poles 81 and 82 but not according to the invention.

Figure 19 illustrates the effects of the operation of a solar radiator applied to the panel 2 with one heat-conducting lamina 30, but not according to the invention, where due to the lack of the second heat-conducting lamina, the two rising air streams are practically identical and are shown in Figure 19 by means of the vertical arrows. Figure 19 does not show the effect of the contact of the two rising air streams in contact with the air that surrounds the panel for the reason that will be detailed during the explanation of Figure 20.

Figure 20 illustrates the operation of the solar radiator applied to a panel with the device with one heat-conducting lamina 30 and two transparent laminas 21 and 22. This allows to concentrate almost all of the energy that is collected by the heat-conducting lamina in the two air streams that circulate in the interspaces 51 and 52, increasing considerably the efficiency of the panel 2.

Figure 21 is a view of a panel composed of a device constituted by a fabric made of heat-conducting material. Such fabric is supported laterally with respect to the supporting frame by means of cables and corresponding accessories, the latter not being shown in the accompanying figures. As an alternative, the fabric can be fixed directly to the supporting poles 15 by means of other accessories. The heat-conducting fabric can be supported by metallic laminas.

Figure 22 is a view of a panel as in Figure 21, with the difference that the device composed of a heat-conducting sheet or lamina passes alternately from one side to the other of the poles 15 that support the panel.

The effectiveness of each panel 2 can be increased by means of several refinement, the first of which entails using lateral spacers which are trapezoidal so as to give the interspace 50 a truncated-pyramid shape. The convergence of the heat-conducting laminas 31 and 32 toward their upper end causes the air that enters from the lower end of the interspace 50 to be forced, during its rising motion, to strike with greater pressure the surface of the heat-conducting laminas 31 and 32, facilitating heat exchange considerably.

Additional solutions aimed at adjusting energy absorption by the heat-conducting laminas 31 and 32 cover externally or internally or on both sides said laminas with a light-absorbing layer, which is constituted for example by a film or a coat of dark and preferably matt paint.

Further solutions aimed at improving the solar energy absorption of the panel entail that the device, composed of the heat-conducting laminas and any spacers, comprises accessories such as horizontal and/or vertical hinges which are connected mechanically to the supporting poles at the convenient center-of-gravity axes, vertical or horizontal centers of gravity or with a universal-joint device, in order to allow to vary the orientation of the device, and consequently of the laminas, as a function of the variation of the position of the sun during the day. In order to further enhance the orientation capacity of said device, the hinges and other accessories mentioned earlier can be provided with a plurality of automated and programmed electromechanical components, which are functionally connected to said orientation means in order to assist said remote orientation.

Protection of each panel 2 against the action of natural electrical agents can be achieved by resorting for example to lightning protection or by using for example a cathode protection, or both, or another solution. The environmental impact of the solar radiator 1 can be reduced from a visual standpoint by covering each panel 2 with a camouflage coloring which resembles the coloring of the surrounding environment, or from an environmental standpoint by providing each panel 2 by using recyclable materials, such as wood poles and metal laminas.

Further embodiments of the panel 2, shown in the accompanying Figures 14, 15 and 16, entail giving the heat-conducting laminas 31 and 32 an arc-like or even cylindrical shape. In the latter case, as an example, each panel 2' is composed of two heat-conducting laminas 31' and 32' which have a different radius of curvature, are mutually coaxial and are spaced by two lateral spacers 41' and 42' which are interposed between the two heat-conducting laminas 31' and 32' and are joined at their lateral ends, or in diametrically opposite positions, so as to form internally the interspace 50, which allows the passage of the air stream generated due to solar irradiation; the supports are not detailed in the accompanying figures. These embodiments, which can be easily installed and subsequently removed, are for example, thanks to their shape, particularly useful to protect delimited areas in which particular crops are planted, such as for example young plants, in locations where there is insufficient water for irrigation and it is not convenient to use other protections. If necessary, it is also possible to arrange the panel of figure 21 or 22 in a substantially horizontal position, keeping it suspended parallel to the ground, with the aid of cables and respective supports and accessories, providing in the heat-conducting lamina optionally a plurality of through holes in order to allow the outflow of the hot air that forms below it.

The solar radiator 1, shown generally in Figures 6, 7, 8 and 9, comprises a structure constituted by a plurality of panels 2 whose number can vary according to the extension of the surface to be protected. The solar radiator is positioned by arranging the panels 2 along substantially parallel rows and by installing them so that the heat-conducting laminas 31 and 32 are arranged at a distance from the ground which is variable from a few centimeters to a few meters (where the term "variable" does not mean that the laminas move up and down), such as to leave a space sufficient to allow the natural circulation of the air within the interspace 50. The rows composed of the panels 2, which are superimposed and arranged side by side so as to constitute a sort of long modular panel, must be spaced and oriented so that their faces are directed east/west or according to the effect to be obtained and can be substantially straight or slightly curved as in Figures 7 and 9. In particular, it is necessary to avoid the mutual influence that shadows can produce during the hottest hours of the day on the nearby panels, optionally ignoring their effect in the early and late hours of the day.

Considering by way of non-limiting explanatory example the equatorial line and panels with two heat-conducting laminas, the rows composed of the panels 2 generally must be positioned so that each panel 2 advantageously has its heat-conducting lamina 31 exposed to the east in order to collect the greatest quantity of solar rays in the morning and the heat-conducting lamina 32 exposed to the west in order to collect the greatest quantity of solar radiation in the afternoon, or vice versa. Of course, in the case of a panel with a single heat-conducting lamina, , the panels are installed so that the lamina is oriented with one face to the east and the other face to the west, respectively. Of course, the installation orientation of the panels 2 depends on the geographical location of the soil to be protected and can vary according to the seasons and to the path of the daily apparent motion of the sun or to the result to be obtained.

With reference to Figure 19, the rays of the sun strike the heat-conducting lamina 30, heating it; the lamina is made of metal or other heat-conducting material or other material suitable for the purpose. The lamina must be oriented so that its faces collect the greatest quantity of solar radiation in the morning and afternoon. The rays of the sun produce a considerable heating of the lamina. The lamina cools due to the effect of the spontaneous air streams, as shown in detail in Figure 19. The warm air streams rise due to their lower relative density. In this first step of the construction of the panel, one shadow and two warm air streams are obtained as shown in detail in Figure 19. The operating principle entails increasing the efficiency of the panel with a single lamina of heat-conducting material by installing a second heat-conducting lamina as shown in the details given in Figures 1, 2 and 17. The interspace 50 allows the circulation of a natural cooling air stream that is delimited to it, said air arriving from the vicinity of the panel. The second lamina allows the circulation of the air stream in the interspace 50, avoiding the dispersion of the heat energy of said air stream with the rest of the air that circulates in the vicinity of the panel. Another possibility to increase the heat efficiency of the panel entails installing two transparent laminas which are coupled to the heat-conducting lamina as shown in Figure 20, said transparent laminas being made of the most appropriate material. With this modification, the air streams generated within the interspaces 51 and 52, according to Figure 20, do not dissipate the heat energy with the air that surrounds the panel. In this manner, at the output of the two interspaces 51 and 52 of the panel, as shown in Figure 20, it is possible to obtain two streams of air which is warmer than the air on the edges of the lamina of the panel without transparent laminas. Other solutions to increase the efficiency of the panels have been described earlier. All the panels produce warm air. All the streams of warm air move spontaneously away from the ground, carrying to altitude the heat energy that they accumulated while they were in contact with the laminas of the panel. All the warm air streams remove at least partially the excessive heat energy to disperse it at higher levels of the atmosphere.

The laminas are installed at a suitable distance from the ground so as to allow air to enter from the lower part of the interspaces. The heat-conducting laminas and accessories are installed, in respect to the ground, at the distance which depends on the results to be obtained.

While the panel 2 shields the ground from the direct action of the sun, producing shadow zones, the streams of rising warm air, in addition to drawing cooler air indeed from these adjacent shadow zones, disperse in the atmosphere the heat accumulated by the heat-conducting laminas, moving it away from the ground.

In any case, the solar radiator 1 does not accumulate energy, cools spontaneously during the night, does not pollute and does not require additional energy to operate.

Specific examples of application, implemented to reduce the effects of the irradiation of the sun which might be too intense in certain situations, provide for the installation of the solar radiator 1 on the covering of greenhouses 150, as shown in Figure 11, or on snowfields or ice-covered surfaces, so as to prevent or delay their melting.

If the effects of the solar radiator 1 are not considered necessary or are considered excessive, it is possible to remove the radiator completely and at any time, or optionally cover it with sheets or other light-reflective material, so as to neutralize its effects, or simply roll up the heat-conducting laminas 31 and 32 of the panels 2 if they are constituted by sheets or other flexible Material or neutralize their effect with other compatible systems.

In practice it has been found that the solar radiator according to the invention fully achieves the intended aim and objects, since although being simple and relatively cheap to provide it ensures the possibility to reduce the effects of an excessive exposure of soil to solar radiation and to modify environmental conditions, lowering the temperature of the portion of ground that is protected and of the first meters of the atmosphere that are adjacent to it, consequently reducing the melting of snow and ice in mountain or polar areas and in some cases supplying moisture, especially at night, due to the condensation of the moisture in the air, as is very likely for example in dry and desert-like areas. Further, the solar radiator according to the invention is able to reduce the effects of periods of drought without consuming energy and is capable of keeping in the shade or partial shade for many hours important portions of the location where it is installed, reducing the evaporation of water, reducing the dehydration stress of plants, or reducing the evaporation of ground moisture, and consequently contrasting the drying of the ground.

The solar radiator thus conceived is susceptible of numerous modifications and variations, all of which are within the scope of the appended claims; all the details may further be replaced with other technically equivalent elements.

In practice, the materials employed, so long as they are compatible with the specific use, as well as the contingent shapes and dimensions, may be any according to requirements and to the state of the art.

## Claims

1. Solar radiator (1) constituted by a plurality of rows comprising a plurality of panels (2), each panel (2) comprising supports (15, 81, 82) and a device composed of two beat-conducting laminas (31, 32) which may even have mutually dissimilar shape and face each other and are mutually spaced by at least one pair of lateral spacers (4.1, 42), which are interposed between said heat-conducting laminas and arc joined at their lateral ends so as to form an interspace (50) between said two heat-conducting laminas, said panel (2) being adapted to produce shade and collect, transmit and disperse passively at least part of the energy of the solar radiation that strikes it, whereby the solar radiator is constituted by arranging the panels (2) along substantially parallel rows and by installing them so that at least one of the heating conducting laminas (31, 32) is arranged at a distance from the ground, such as to leave a space sufficient to allow the natural circulation of the air within the interspace (50) and whereby the panels (2) are arranged side by side.

2. The solar radiator (1) according to claim 1, **characterized in that** said heat-conducting laminas (31, 32) have different heights, the tallest of said two heat-conducting laminas acting as ground support in order to help to support said panel (2) and ensure the access of said air into said interspace.

3. The solar radiator (1) according to one or more of the preceding claims, **characterized in that** said lateral spacers (41, 42) substantially trapezoidal and give said interspace (50) a substantially truncated-pyramid shape.

4. The solar radiator (1) according to one or more of the preceding claims, **characterized in that** said panel (2) comprises at least one transparent lamina, whose shape substantially coincides with the shape of said heat-conducting lamina, said transparent lamina facing said heat-conducting lamina at a distance which is determined by spacers which are interposed between said transparent lamina and said heat-conducting lamina and are joined at their lateral ends in order to form an interspace between said transparent lamina and said heat-conducting lamina.

5. The solar radiator (1) according to one or more of the preceding claims, **characterized in that** said panel comprises a thermally insulating lamina (16), whose shape substantially coincides with the shape of said heat-conducting laminas (31, 32) and which is interposed between said heat-conducting laminas (31, 32) in order to form two interspaces (51, 52) of equal size.

6. The solar radiator (1) according to one or more of the preceding claims, **characterized in that** said panel (2) comprises a camouflage coloring which reproduces the landscape in order to reduce the visual environmental impact.

7. The solar radiator (J) according to one or more of the preceding claims, **characterized in that** said panel (2) comprises a protection against, electrical phenomena.

8. The solar radiator (1) according to one or more of the preceding claims, **characterized in that** said panel (2) comprises a structure which is composed of supports, cables, and accessories and supports at least one heat-conducting element.

9. The solar radiator (1) according to one or more of the preceding claims, **characterized in that** it uses devices of materials which are different from heat conducting material.

10. The solar radiator (1) according to one or more of the preceding claims, **characterized in that** it comprises accessories which allow to roll up the laminas or roll-up fabrics.

11. The solar radiator (1) according to one or more of the preceding claims, **characterized in that** it comprises at least one heat-conducting lamina with at least one type of mechanical reinforcement for at least one portion of said heat-conducting lamina in order to give mechanical stability to said panel.

12. The solar radiator (1) according to one or more of the preceding claims, **characterized in that** said heat-conducting laminas comprise a light-absorbing layer, which is superimposed on at least one portion of said heat-conducting laminas in order to increase the effectiveness of said panel.

13. The solar radiator (1) according to one or more of the preceding claims, **characterized in that** said heat-conducting laminas (31, 32) comprise a curve which gives said panel an arc-like configuration

14. Solar radiator constituted by a panel (2') consisting of two heat-conducting laminas (31', 32') of substantially cylindrical shape and which have a different radius, are mutually coaxial and are spaced by two lateral spacers (41', 42') which are interposed between the two heat-conducting laminas (31', 32'), so as to form internally an interspace (50'), allowing the free circulation of air that enters from the lower part of the interspace of the panel (2'), said panel (2') being adapted to produce shade and collect, transmit and disperse passively at least part of the energy of the solar radiation that strikes it.

## Patentansprüche

1. Solarstrahler (1) bestehend aus zahlreichen Reihen, die sich ihrerseits aus mehreren Paneelen zusammensetzen (2); jedes Paneel (2) umfasst Halterungen (15, 81, 82) sowie eine Vorrichtung, die aus zwei wärmeleitenden Lamellen (31, 32) besteht, deren Aufbau auch eine nichtübereinstimmende Form aufweisen kann; genannte Lamellen sind gegenüberliegend aufgebaut und durch mindestens zwei Trennelemente (41, 42) voneinander distanziert; die Trennelemente befinden sich zwischen den beiden erwähnten, aus wärmeleitendem Werkstoff gefertigten Lamellen und sind jeweils an den Enden miteinander verbunden, so dass sie einen Zwischenraum (50) zwischen den Lamellen bilden; genanntes Paneel (2) eignet sich dazu, Schatten zu spenden und zumindest einen Teil der Energie aus der darauf wirkenden Sonneneinstrahlung aufzufangen, zu übertragen und passiv abzuleiten; genannter Solarstrahler ist so aufgebaut, dass die Paneelreihen (2) im Wesentlichen parallel verlaufen; die einzelnen Paneele sind ferner so aufgestellt, dass mindestens eine wärmeleitende Lamelle (31, 32) in ausreichendem Abstand zum Boden positioniert ist, um die natürliche Luftzufuhr in den Zwischenraum (50) zu ermöglichen; genannte Paneele (2) werden nebeneinander installiert.

2. Solarstrahler (1) nach Anspruch 1, **dadurch gekennzeichnet, dass** besagte wärmeleitende Lamellen (31, 32) unterschiedliche Höhe aufweisen, wobei die höhere der beiden als Träger fungiert, der als Hilfsstütze für das Paneel (2) dient und gleichzeitig die Luftzufuhr in den Zwischenraum ermöglicht.

3. Solarstrahler (1) nach einem oder mehreren der vorstehenden Ansprüche, **gekennzeichnet durch** die Anwesenheit von seitlichen, im Wesentlichen trapezförmigen Trennelementen (41, 42), die dem Zwischenraum (50) eine im Wesentlichen stumpf pyramidale Form verleiht.

4. Solarstrahler (1) nach einem oder mehreren der vorstehenden Ansprüche, **dadurch gekennzeichnet, dass** besagtes Paneel (2) mindestens eine Lamelle aus transparentem Material aufweiset, deren Bauform mit besagter wärmeleitender Lamelle im Wesentlichen übereinstimmt; die erwähnte durchsichtige Lamelle ist der wärmeleitenden Lamelle gegenüberliegend positioniert und mit derselben verbunden, wobei der Abstand durch die Trennelemente gegeben ist, die sich zwischen der durchsichtigen und der wärmeleitenden Lamelle befinden, und somit einen Hohlraum zwischen der durchsichtigen und der wärmeleitenden Lamelle bilden.

5. Solarstrahler (1) nach einem oder mehreren der vorstehenden Ansprüche, **dadurch gekennzeichnet, dass** das Paneel über eine wänneisolierende Lamelle (16) verfügt, deren Bauform mit derjenigen der wärmeleitenden Lamelle (31, 32) im Wesentlichen übereinstimmt. Erstere befindet sich zwischen den beiden erwähnten wärmeleitenden Lamellen, somit zwei Zwischenräume (51, 52) gleicher Ausmaße bildend.

6. Solarstrahler (1) nach einem oder mehreren der vorstehenden Ansprüche, **dadurch gekennzeichnet, dass** die für das Paneel (2) verwendete Farbe einen tarnenden Effekt ergibt; die farbliche Abstimmung auf die Landschaft zum Zweck der Tarnung verringert die optische Verunstaltung der Umgebung.

7. Solarstrahler (1) nach einem oder mehreren der vorstehenden Ansprüche, **dadurch gekennzeichnet, dass** besagtes Paneel (2) Schutz gegen elektrische Erscheinungen bietet

8. Solarstrahler (1) nach einem oder mehreren der vorstehenden Ansprüche, **dadurch gekennzeichnet, dass** besagtes Paneel (2) als Struktur aufgebaut ist, die Halterungen, Scile und Zubchör umfasst, welche mindestens ein wärmeleitendes Element tragen.

9. Solarstrahler (1) nach einem oder mehreren der vorstehenden Ansprüche, **dadurch gekennzeichnet, dass** es Vorrichtungen aus Werkstoffen verwendet, die sich von wärmeleitenden Materialien unterscheiden.

10. Solarstrahler (1) nach einem oder mehreren der vorstehenden Absprüche, **dadurch gekennzeichnet, dass** besagtes Paneel (2) Zubehör zum Aufwickeln der Lamellen oder Bahnen umfasst.

11. Solarstrahler (1) nach einem oder mehreren der vorstehenden Ansprüche, **dadurch gekennzeichnet, dass** es mindestens eine wärmeleitende Lamelle umfasst, versehen mit mindestens einer Art von mechanischer Verstärkung auf mindestens einer Teillänge der erwähnten wärmeleitenden Lamelle, deren Zweck in der Erhöhung der Panelbeständigkeit unter dem Gesichtspunkt der Statik liegt.

12. Solarstrahler (1) nach einem oder mehreren der vorstehenden Ansprüche, **dadurch gekennzeichnet, dass** die erwähnte, aus wärmeleitendem Material gefertigte Lamelle auf mindestens einem Abschnitt derselben einen Farbanstrich aufweist, der die Sonnenstrahlen aufnimmt und somit die Leistungsfähigkeit des Paneels erhöht.

13. Solarstrahler (1) nach einem oder mehreren der vorstehenden Ansprüche, **dadurch gekennzeichnet, dass** besagte wärmeleitende Lamelle (31, 32) kurvenförmig gebaut ist und **dadurch** dem Paneel eine gebogene Form verleiht.

14. Solarstrahler bestehend aus einem Paneel (2), der sich aus zwei wärmeleitende Lamellen (31, 32) zusammensetzt; beide weisen im Wesentlichen eine Zylinderform auf, mit unterschiedlichem Radius; besagte Lamellen liegen koaxial und werden durch seitliche Trennelemente (41, 42) voneinander getrennt; die sich zwischen besagten Lamellen befindenden Trennelemente bilden einen Zwischenraum (50), der die freie Zirkulation der Luft ermöglicht, welche durch den unteren Paneelbereich (2) eindringt; besagtes Paneel (2) ist dazu geeignet, schützenden Schatten zu spenden und zumindest einen Teil der Energie aus der auf ihn wirkenden Sonneneinstrahlung aufzufangen, zu übertragen und passiv abzuleiten.

## Revendications

1. Radiateur solaire (1) constitué de nombreux rangs comportant chacun de nombreux panneaux (2) ; chaque panneau (2) comprend des supports (15, 81, 82) et un dispositif réalisé avec deux lames thermoconductrices (31, 32) qui peuvent également être de forme différente ; ces lames sont disposées l'une en face de l'autre, espacées à l'aide d'au moins une paire de séparateurs (41, 42) interposés entre elles, unis aux extrémités de façon à ce que les lames forment un espace vide (50) ; le panneau (2) est utilisé pour projeter de l'ombre et capter, transmettre et disperser massivement au moins une partie de l'énergie du rayonnement solaire qui l'atteint; le radiateur solaire est monté de façon à ce que les rangs de panneaux (2) soient substantiellement parallèles et en installant les panneaux de façon à ce qu'au moins une lame thermoconductrice (31, 32) se trouve à une distance du sol suffisante pour permettre l'entrée naturelle d'un flux d'air dans l'espace vide (50) ; les panneaux (2) sont installés les uns à côté des autres.

2. Radiateur solaire (1) selon la revendication 1, **caractérisé par le fait que** les lames thermoconductrices (31, 32) ont une hauteur différente et que la lame thermoconductrice la plus haute exerce la double fonction de supporter le panneau (2) et de permettre l'entrée du flux d'air dans l'espace vide.

3. Radiateur solaire (1) selon l'une ou plusieurs des revendications précédentes, **caractérisé par le fait qu'**il comprend des séparateurs latéraux (41, 42) de forme substantiellement trapézoïdale, ce qui donne à la section de l'espace vide (50) une forme substantiellement en tronc de pyramide.

4. Radiateur solaire (1) selon l'une ou plusieurs des revendications précédentes, **caractérisé par le fait que** le panneau (2) susmentionné comprend au moins une lame en matériau transparent de forme substantiellement identique à celle de la lame thermoconductrice ; la lame transparente est positionnée devant la lame thermoconductrice et est reliée et maintenue à une distance déterminée de celle-ci par des séparateurs interposés entre elles, de façon à ce que les lames transparente et thermoconductrice forment un espace vide.

5. Radiateur solaire (1) selon l'une ou plusieurs des revendications précédentes, **caractérisé par le fait que** le panneau susmentionné comprend une lame isolante thermique (16), de forme substantiellement identique à celles des lames thermoconductrices (31, 32), interposée entre celles-ci de façon à former deux espaces vides (51, 52) de la même dimension.

6. Radiateur solaire (1) selon l'une ou plusieurs des revendications précédentes, **caractérisé par le fait que** le panneau (2) susmentionné est réalisé dans une couleur permettait d'obtenir un effet mimétique ; cette mimétisation reproduit les couleurs du paysage afin de réduire l'impact visuel sur l'environnement.

7. Radiateur solaire (1) selon l'une ou plusieurs des revendications précédentes, **caractérisé par le fait que** le panneau (2) susmentionné comprend des protections contre les phénomènes électriques.

8. Radiateur solaire (1) selon l'une ou plusieurs des revendications précédentes, **caractérisé par le fait que** le panneau (2) susmentionné est constitué d'une structure réalisée avec des supports, câbles et accessoires pour soutenir au moins l'un des éléments thermoconducteurs.

9. Radiateur solaire (1) selon l'une ou plusieurs des revendications précédentes, **caractérisé par le fait qu'**il utilise des dispositifs constitués de matériaux différents des matériaux thermoconducteurs.

10. Radiateur solaire (1) selon l'une ou plusieurs des revendications précédentes, **caractérisé par le fait qu'**il comprend des accessoires pour l'enroulement des lames ou des toiles.

11. Radiateur solaire (1) selon l'une ou plusieurs des revendications précédentes, **caractérisé par le fait qu'**il comprend au moins une lame thermoconductrice avec au moins un type de renfort mécanique sur au moins une partie de celle-ci, dans le but d'augmenter la stabilité mécanique du panneau.

12. Radiateur solaire (1) selon l'une ou plusieurs des revendications précédentes, **caractérisé par le fait que** sur la lame en matériau thermoconducteur est appliquée, au moins partiellement, une peinture qui absorbe le rayonnement solaire afin d'augmenter l'efficacité du panneau.

13. Radiateur solaire (1) selon l'une ou plusieurs des revendications précédentes, **caractérisé par le fait que** la lame thermoconductrice (31, 32) susmentionnée est de forme courbe afin de réaliser un panneau de forme arquée.

14. Radiateur solaire constitué d'un panneau (2) réalisé avec deux lames thermoconductrices (31, 32) substantiellement de forme cylindrique et de rayon différent l'une de l'autre ; ces lames sont coaxiales et sont séparées par des séparateurs latéraux (41, 42) positionnés entre les lames afin qu'elles forment un espace vide (50) permettant la circulation libre de l'air qui entre depuis la partie inférieure du panneau (2) ; ce panneau (2) est utilisé pour projeter une ombre protectrice et pour capter, transmettre et disperser passivement au moins une partie de l'énergie solaire qui l'atteint.
